# EUROPEAN PATENT APPLICATION

(11) **EP 4 235 220 A1**
(43) Date of publication of application: **30.08.2023**
(21) Application number: 23158138.0
(22) Date of filing: 23.02.2023
(51) Int. Cl.: G01S 17/894, G01S 7/4914

(54) **INDIRECT TIME OF FLIGHT SENSOR WITH PARALLEL PIXEL ARCHITECTURE**

(30) Priority: 24.02.2022 US 202217680146
(71) Applicant: Meta Platforms Technologies, LLC, Menlo Park, CA 94025 (US)
(72) Inventor: BARDAGJY, Andrew Matthew, Menlo Park, 94025 (US); BIKUMANDLA, Ajay, Menlo Park, 94025 (US); BIKUMANDLA, Manoj, Menlo Park, 94025 (US)
(74) Representative: Murgitroyd & Company

(57) **Abstract**

A sensor includes a plurality of pixels that each have dedicated compute circuitry within a compute layer. The plurality of pixels includes a first group of pixels and a second group of pixels. The first group of pixels is configured to detect light from a local area that has a first modulation frequency. The second group of pixels is configured to detect light from the local area that has a second modulation frequency. The compute layer is positioned below the plurality of pixels, and includes the compute circuitry for each of the plurality of pixels. The compute layer is configured to determine depth information for the local area using an indirect time-of-flight technique and one or both of the detected light that has the first modulation frequency and the detected light that has the second modulation frequency.

## Description

### FIELD OF THE INVENTION

This disclosure relates generally to time of flight sensors, and more specifically to an indirect time of flight sensor with parallel pixel architecture.

### BACKGROUND

Depth sensing systems determine depth information describing a local area. Conventional depth sensing systems, in particular those with small form factors (e.g., head mounted), generally are capable of projecting structured light patterns or flood illumination, but not both.

### SUMMARY

According to the present invention there is provided a sensor comprising: a plurality of pixels, wherein each pixel comprises dedicated compute circuitry, the plurality of pixels including: a first group of pixels configured to detect light from a local area that has a first modulation frequency; a second group of pixels configured to detect light from the local area that has a second modulation frequency; and a compute layer that includes the compute circuitry for each of the plurality of pixels, the compute layer configured to determine depth information for the local area using an indirect time-of-flight technique and one or both of the detected light that has the first modulation frequency and the detected light that has the second modulation frequency.

Optionally the first frequency is lower than the second frequency.

Optionally each pixel of the first group of pixels has a first detection area.

Optionally each pixel of the second group of pixels has a second detection area.

Optionally the second detection area is smaller than the first detection area.

Optionally, the first group of pixels is arranged in a series of rows with rows of the second group of pixels interleaved therebetween.

Optionally each of the plurality of pixels has its own clock.

Optionally the depth information is computed asynchronously for the plurality of pixels.

Optionally, the compute circuitry for each of the plurality of pixels includes an analog to digital converter configured to output a first digital signal corresponding to light detected having a particular modulation frequency.

Optionally the compute circuitry for each of the plurality of pixels includes a cross-correlation circuit configured to determine an estimated depth based on the first digital signal and a second digital signal output from an adjacent pixel configured to detect light having a different modulation frequency.

Optionally the sensor is part of a depth determination assembly that includes an illuminator.

Optionally the compute layer is configured to: determine a first portion of the local area to illuminate with the light having the first modulation frequency and determine a second portion of the local area to illuminate with the light having the second modulation frequency.

Optionally the first portion of the local area is different than the second portion of the local area.

Optionally the illuminator is configured to concurrently project light having the first modulation frequency to the first portion of the local area and light having the second modulation frequency to the second portion of the local area.

Optionally, the first portion of the local area is further from the user than the second portion of the local area.

Optionally the compute layer is further configured to determine the first portion of the local area to illuminate with the light having the first modulation frequency based in part on the first portion of the local area being at a first distance that is greater than a threshold distance from the sensor.

Optionally the compute layer is further configured to determine the second portion of the local area to illuminate with the light having the second modulation frequency based in part on the second portion of the local area being at a second distance that is less than the threshold distance from the sensor.

Optionally each pixel includes a microlens, a filter, and a polarizer in optical series with a detection area of the pixel.

Optionally, the sensor is integrated into a headset.

According to the present invention there is further provided a depth determination assembly (DDA) comprising: an illuminator, comprising: a first coherent light source array on a substrate, the first coherent light source array configured to emit light that is modulated at a first frequency; a second coherent light source array on the substrate, the second coherent light source array configured to emit light that is modulated at a second frequency; and an optical assembly configure to condition light from the first coherent light source array and light from the second coherent light source array and project the conditioned light into a local area of the DDA; a sensor comprising: a plurality of pixels, wherein each pixel comprises dedicated compute circuitry, the plurality of pixels including: a first group of pixels configured to detect light from the local area that has the first modulation frequency; a second group of pixels configured to detect light from the local area that has the second modulation frequency; and a compute layer that includes the compute circuitry for each of the plurality of pixels, wherein the compute layer is configured to determine depth information for the local area using an indirect time-of-flight technique and one or both of the detected light that has the first modulation frequency and the detected light that has the second modulation frequency.

Optionally the first frequency is lower than the second frequency.

Optionally each pixel of the first group of pixels has a first detection area.

Optionally each pixel of the second group of pixels has a second detection area.

Optionally the second detection area is smaller than the first detection area.

Optionally, the first group of pixels is arranged in a series of rows with rows of the second group of pixels interleaved therebetween.

Optionally each of the plurality of pixels has its own clock.

Optionally the depth information is computed asynchronously for the plurality of pixels.

Optionally, the compute circuitry for each of the plurality of pixels includes an analog to digital converter configured to output a first digital signal corresponding to light detected having a particular modulation frequency.

Optionally the compute circuitry for each of the plurality of pixels includes a cross-correlation circuit configured to determine an estimated depth based on the first digital signal and a second digital signal output from an adjacent pixel configured to detect light having a different modulation frequency.

Optionally the compute layer is configured to: determine a first portion of the local area to illuminate with the light having the first modulation frequency and determine a second portion of the local area to illuminate with the light having the second modulation frequency.

Optionally the first portion of the local area is different than the second portion of the local area.

Optionally the illuminator is configured to concurrently project light having the first modulation frequency to the first portion of the local area and light having the second modulation frequency to the second portion of the local area.

Optionally, the first portion of the local area is further from the user than the second portion of the local area.

Optionally the compute layer is further configured to determine the first portion of the local area to illuminate with the light having the first modulation frequency based in part on a first set of signal to noise ratios (SNRs) detected by a first subset of the plurality of pixels that detect light from the first portion of the local area.

Optionally the compute layer is further configured to determine the second portion of the local area to illuminate with the light having the second modulation frequency based in part on a second set of SNRs detected by a second subset of the plurality of pixels that detect light from the second portion of the local area.

Optionally each pixel includes a microlens, a filter, and a polarizer in optical series with a detection area of the pixel.

Optionally, the DDA is integrated into a headset.

According to the present invention there is yet further provided a non-transitory computer-readable medium configured to store program code instructions, when executed by a processor of a depth determination assembly (DDA), cause the DDA to perform steps comprising: detecting, using a sensor, at least one of light modulated at a first frequency or light modulated at a second frequency, wherein the light is received from a local area, and each pixel has dedicated compute circuitry, the plurality of pixels including: a first group of pixels configured to detect light from the local area that has the first modulation frequency; a second group of pixels configured to detect light from the local area that has the second modulation frequency; determining, using a compute layer of the sensor, depth information for the local area using an indirect time-of-flight technique and one or both of the detected light that has the first modulation frequency and the detected light that has the second modulation frequency, wherein the compute layer includes the compute circuitry for each of the plurality of pixels.

An indirect time of flight (ToF) sensor with parallel pixel architecture is described. The sensor may be integrated into a depth determination assembly (DDA) that also includes an illuminator. The sensor includes a plurality of parallel pixels (referred to as pixels) and each pixel has dedicated compute circuitry. The plurality of pixels include different groups of pixels configured to detect light modulated with different frequencies or different wavelengths. A compute layer of the sensor includes the compute circuitry for each of the plurality of parallel pixels. In general, the compute layer is configured to determine depth information for the local area using an indirect ToF technique and one or more of the detected light with different respective modulation frequencies. More specifically, the compute circuitry for a specific pixel is configured to determine depth information associated with light detected by that pixel. The compute circuity can disambiguate depth information for the pixel based in part on information from an adjacent pixel that is configured to detect light modulated at a different frequency.

The illuminator illuminates the local area with light modulated at different frequencies. In some embodiments, the illuminator illuminates a same portion of the local area with light modulated at different frequencies. In some embodiments, the illuminator may selectively illuminate different portions of the local area with light modulated at different frequencies (e.g., in accordance with instructions from the compute layer).

### BRIEF DESCRIPTION OF THE DRAWINGS

FIG. 1A is a perspective view of a headset implemented as an eyewear device, in accordance with the present invention;
FIG. 1B is a perspective view of a headset implemented as a head-mounted display, in accordance with the present invention;
FIG. 2 is a block diagram of a DDA, in accordance with the present invention;
FIG. 3A is a schematic diagram of a DDA flood illuminates a local area with light modulated at different frequencies, in accordance with the present invention;
FIG. 3B is a schematic diagram of the DDA of FIG. 3A selectively illuminating objects in the local area with light, in accordance with the present invention;
FIG. 4 is an example top down view of a portion of an indirect ToF sensor with parallel pixel architecture, in accordance with the present invention;
FIG. 5 is an abstract view of an indirect ToF sensor with parallel pixel architecture, in accordance with the present invention;
FIG. 6 is a block diagram of a structure of a pixel within the indirect ToF sensor of FIG. 5;
FIG. 7 is a flowchart illustrating a process for determining depth information using a DDA, in accordance with the present invention; and
FIG. 8 is a system that includes a headset, in accordance with the present invention.

The figures depict various embodiments for purposes of illustration only. One skilled in the art will readily recognize from the following discussion that alternative aspects of the structures and methods illustrated herein may be employed without departing from the principles described herein.

### DETAILED DESCRIPTION OF EXAMPLES OF THE INVENTION

An indirect ToF sensor with parallel pixel architecture is described. The sensor includes a plurality of parallel pixels (referred to as pixels) that include a plurality of different groups of pixels and each pixel has respective dedicated compute circuitry (e.g., analog to digital converter, cross correlation circuit, etc.). Each group of pixels is configured to detect light modulated at a different frequency. The parallel pixel architecture describes how each pixel includes and/or is coupled to dedicated respective compute circuitry. The plurality of pixels include different groups of pixels configured to detect light modulated with different frequencies (e.g., 30 MHz and 100 MHz). A compute includes the respective compute circuitry for each of the plurality of parallel pixels. The compute layer is configured to calibrate and determine depth information for the local area using an indirect time-of-flight technique and one or more of the detected light that have different respective modulation frequencies. The local compute circuitry can create a phase magnitude map with different amplitudes enabling the confidence to dictate the choice of secondary frequencies.

The respective compute circuitries for each respective pixel are configured to determine depth information associated with light detected by their respective pixel. A compute circuity, for a given pixel, can disambiguate depth information for the given pixel based in part on information from an adjacent pixel (e.g., from the dedicated compute circuitry of the adjacent pixel) that is configured to detect light modulated at a different frequency. Note that the depth determination is performed at the respective compute circuitries for each pixel and is performed in an asynchronous manner relative to other pixels of the sensor. Accordingly, the parallel pixel architecture provides depth determination asynchronously on a per-pixel basis (v. e.g., a global readout and depth determination on all pixels in a sensor).

The sensor may be integrated into a DDA that includes an illuminator. The DDA may be part of a wearable device (e.g., headset). The illuminator is configured to illuminate the local area with light modulated at different frequencies. The illumination including light modulated at different frequencies may occur concurrently, be multiplexed in time, etc. In some examples of the invention, the illuminator may illuminate a same portion of the local area with light modulated at different frequencies. In some examples, the illuminator may selectively illuminate different portions of the local area with light modulated at different frequencies (e.g., in accordance with instructions from the compute layer).

Note that single frequency indirect ToF suffers from range folding which can result in errors for depth determination when measuring depth with objects at different distance overlapping in the instantaneous field of view. Conventionally, this may be solved, using light modulated at a second frequency. While this works well for static scenes, it can lead to problems of motion blur for scenes with dynamic aspects (e.g., movement of object in scene relative to sensor). This can occur, in part, because indirect TOF generally relies on quadrature sampling to measure phase shift which is mapped to distance. In quadrature sampling, generally at least four phases (occurs over multiple frames, e.g., 4-6 frames in four quadrants depending on sampling type, 8 frames for dual frequency operation) are captured for a given modulation frequency and used to determine depth. However, to disambiguate the determined depth an additional set of phases (e.g., another 8 image frames) is also captured at a different modulation frequency. Conventional indirect ToF sensors generally collect data at a first modulation frequency from the entire sensor (synchronous), and then do the same thing but for a different modulation frequency. The conventional depth determination system may then calculate the depth information suing the collected data via a processor that is separate from the sensor. As such, the number of collected image frames at each of the frequencies (e.g., 16) can result in significant motion blur and significant increase in power consumption for image capture and compute if conventional indirect ToF sensors are used.

In contrast, the indirect ToF sensor with parallel pixel architecture performs depth determination asynchronously at each pixel. Moreover, the indirect ToF sensor includes pixels configured to detect (e.g., concurrently) light modulated at different frequencies (e.g., light modulated at a first frequency, and light modulated at a second frequency). Any given pixel of the indirect ToF sensor is able to use information from one or more adjacent pixels that are configured to detect modulated light at a different frequency than the given pixel to disambiguate depth information for the given pixel. And as the indirect ToF sensor can concurrently detect light modulated at different frequencies, pixels of the indirect ToF sensor are able to determine associated depth information faster than conventional indirect ToF systems, thereby, mitigating changes of motion blur relative a conventional indirect ToF system.

Examples of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, in some examples of the invention, artificial reality may also be associated with applications, products, accessories, services, or some combination thereof, that are used to create content in an artificial reality and/or are otherwise used in an artificial reality. The artificial reality system that provides the artificial reality content may be implemented on various platforms, including a wearable device (e.g., headset) connected to a host computer system, a standalone wearable device (e.g., headset), a mobile device or computing system, or any other hardware platform capable of providing artificial reality content to one or more viewers.

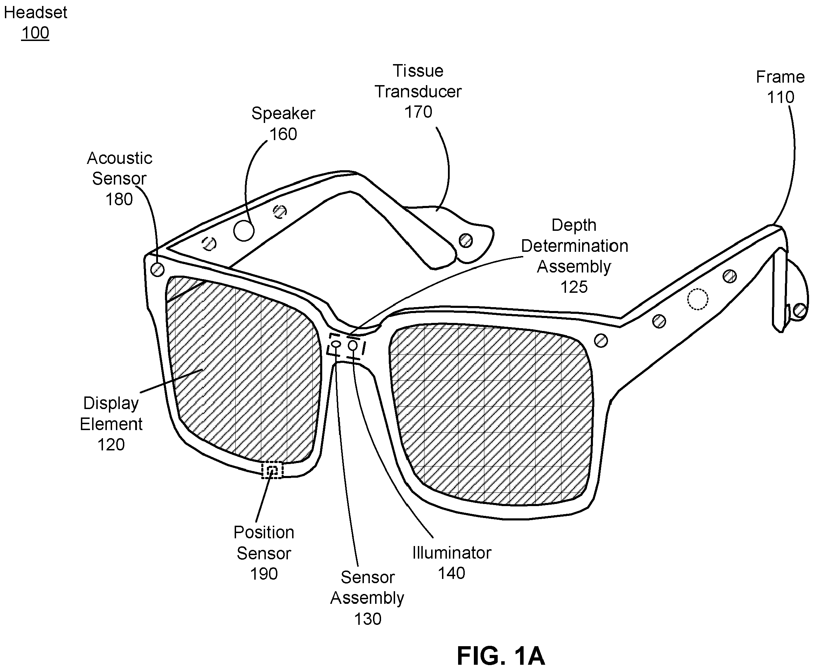

FIG. 1A is a perspective view of a headset 100 implemented as an eyewear device, in accordance with the present invention. The eyewear device may be a near eye display (NED). In general, the headset 100 may be worn on the face of a user such that content (e.g., media content) is presented using a display assembly and/or an audio system. However, the headset 100 may also be used such that media content is presented to a user in a different manner. Examples of media content presented by the headset 100 include one or more images, video, audio, or some combination thereof. The headset 100 includes a frame, and may include, among other components, a display assembly including one or more display elements 120, a depth determination assembly (DDA) 125, an audio system, and a position sensor 190. While FIG. 1A illustrates the components of the headset 100 in example locations on the headset 100, the components may be located elsewhere on the headset 100, on a peripheral device paired with the headset 100, or some combination thereof. Similarly, there may be more or fewer components on the headset 100 than what is shown in FIG. 1A.

The frame 110 holds the other components of the headset 100. The frame 110 includes a front part that holds the one or more display elements 120 and end pieces (e.g., temples) to attach to a head of the user. The front part of the frame 110 bridges the top of a nose of the user. The length of the end pieces may be adjustable (e.g., adjustable temple length) to fit different users. The end pieces may also include a portion that curls behind the ear of the user (e.g., temple tip, ear piece).

The one or more display elements 120 provide light to a user wearing the headset 100. As illustrated the headset includes a display element 120 for each eye of a user. A display element 120 may generate image light that is provided to an eyebox of the headset 100. The eyebox is a location in space that an eye of user occupies while wearing the headset 100. For example, a display element 120 may be a waveguide display. A waveguide display includes a light source (e.g., a two-dimensional source, one or more line sources, one or more point sources, etc.) and one or more waveguides. Light from the light source is in-coupled into the one or more waveguides which outputs the light in a manner such that there is pupil replication in an eyebox of the headset 100. Incoupling and/or outcoupling of light from the one or more waveguides may be done using one or more diffraction gratings. In some examples, the waveguide display includes a scanning element (e.g., waveguide, mirror, etc.) that scans light from the light source as it is in-coupled into the one or more waveguides. Note that in some examples, one or both of the display elements 120 are opaque and do not transmit light from a local area around the headset 100. The local area is the area surrounding the headset 100. For example, the local area may be a room that a user wearing the headset 100 is inside, or the user wearing the headset 100 may be outside and the local area is an outside area. In this context, the headset 100 generates VR content. Alternatively, one or both of the display elements 120 can be at least partially transparent, such that light from the local area may be combined with light from the one or more display elements to produce AR and/or MR content.

In some examples, a display element 120 does not generate image light, and instead is a lens that transmits light from the local area to the eyebox. For example, one or both of the display elements 120 may be a lens without correction (non-prescription) or a prescription lens (e.g., single vision, bifocal and trifocal, or progressive) to help correct for defects in a user's eyesight. The display element 120 may be polarized and/or tinted to protect the user's eyes from the sun.

The display element 120 may include an additional optics block (not shown). The optics block may include one or more optical elements (e.g., lens, Fresnel lens, etc.) that direct light from the display element 120 to the eyebox. The optics block may, e.g., correct for aberrations in some or all of the image content, magnify some or all of the image, or some combination thereof.

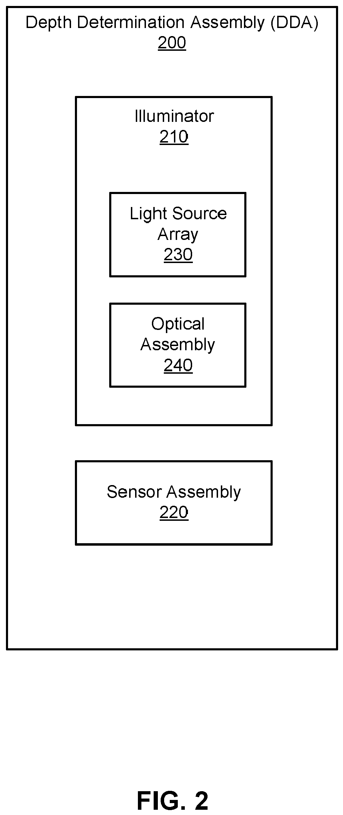

The DDA 125 determines depth information for a portion of a local area surrounding the headset 100. The DDA 125 includes a sensor assembly 130 and an illuminator 140. The illuminator 140 illuminates some or all of the local area with modulated light at one or more frequencies. For example, the illuminator 140 may illuminate some or all of the local area with light modulated at one frequency, and also illuminate some or all of the local area with light modulated at one or more different frequencies. The illuminator 140 may emit light modulated at a first frequency and concurrently emit light modulated at one or more different frequencies. The portion of the local area illuminated with the light modulated at one frequency may be the same or different from the portion of the light modulated at different frequencies. The illuminator 140 may time multiplex the emission of light modulated at different frequencies (e.g., first and second). The emitted light may be flood illumination. The emitted light can include a spatial pattern (e.g., dots, parallel lines, etc.). The illuminator 140 may dynamically direct light to one or more specific regions of the local area. The illuminator 140 may dynamically direct light modulated at a one frequency to one or more specific regions of the local area, and direct (concurrently or time multiplexed) light modulated at a different frequency to at least one different region of the local area. The DDA 125 is discussed in detail below with regard to, e.g., FIGs. 2-8.

The sensor assembly 130 detects the light reflected/scattered from objects in the local area that were illuminated with light from the light source array. The sensor assembly 130 includes one or more indirect ToF sensors with parallel pixel architecture. The indirect ToF sensor includes a plurality of pixels. The plurality of pixels include different groups of pixels configured to detect light modulated with different frequencies. A compute layer includes the respective compute circuitry for each of the plurality of parallel pixels. The compute layer is configured to determine depth information for the local area using an indirect time-of-flight technique and one or more of the detected light that have different respective modulation frequencies. The depth information may be used by other components (e.g., the audio system, the display assembly, an application, etc.) to facilitate presenting content to the user. The one or more indirect ToF sensors may control the illuminator 140. For example, the compute layer may instruct the illuminator 140 to emit light modulated light of one or more frequencies and amplitudes into a same or different portions of the local area.

The audio system provides audio content. The audio system includes a transducer array, a sensor array, and an audio controller. However, in other embodiments, the audio system may include different and/or additional components. Similarly, in some cases, functionality described with reference to the components of the audio system can be distributed among the components in a different manner than is described here. For example, some or all of the functions of the controller may be performed by a remote server.

The transducer array presents sound to user. The transducer array includes a plurality of transducers. A transducer may be a speaker 160 or a tissue transducer 180 (e.g., a bone conduction transducer or a cartilage conduction transducer). Although the speakers 160 are shown exterior to the frame 110, the speakers 160 may be enclosed in the frame 110. In some examples, instead of individual speakers for each ear, the headset 100 includes a speaker array comprising multiple speakers integrated into the frame 110 to improve directionality of presented audio content. The tissue transducer 180 couples to the head of the user and directly vibrates tissue (e.g., bone or cartilage) of the user to generate sound. The number and/or locations of transducers may be different from what is shown in FIG. 1A.

The sensor array detects sounds within the local area of the headset 100. The sensor array includes a plurality of acoustic sensors 180. An acoustic sensor 180 captures sounds emitted from one or more sound sources in the local area (e.g., a room). Each acoustic sensor is configured to detect sound and convert the detected sound into an electronic format (analog or digital). The acoustic sensors 180 may be acoustic wave sensors, microphones, sound transducers, or similar sensors that are suitable for detecting sounds.

One or more acoustic sensors 180 may be placed in an ear canal of each ear (e.g., acting as binaural microphones). The acoustic sensors 180 may be placed on an exterior surface of the headset 100, placed on an interior surface of the headset 100, separate from the headset 100 (e.g., part of some other device), or some combination thereof. The number and/or locations of acoustic sensors 180 may be different from what is shown in FIG. 1A. For example, the number of acoustic detection locations may be increased to increase the amount of audio information collected and the sensitivity and/or accuracy of the information. The acoustic detection locations may be oriented such that the microphone is able to detect sounds in a wide range of directions surrounding the user wearing the headset 100.

An audio controller processes information from the sensor array that describes sounds detected by the sensor array. The audio controller may comprise a processor and a computer-readable storage medium. The audio controller may be configured to generate direction of arrival (DOA) estimates, generate acoustic transfer functions (e.g., array transfer functions and/or head-related transfer functions), track the location of sound sources, form beams in the direction of sound sources, classify sound sources, generate sound filters for the speakers 160, or some combination thereof.

The position sensor 190 generates one or more measurement signals in response to motion of the headset 100. The position sensor 190 may be located on a portion of the frame 110 of the headset 100. The position sensor 190 may include an inertial measurement unit (IMU). Examples of position sensor 190 include: one or more accelerometers, one or more gyroscopes, one or more magnetometers, another suitable type of sensor that detects motion, a type of sensor used for error correction of the IMU, or some combination thereof. The position sensor 190 may be located external to the IMU, internal to the IMU, or some combination thereof.

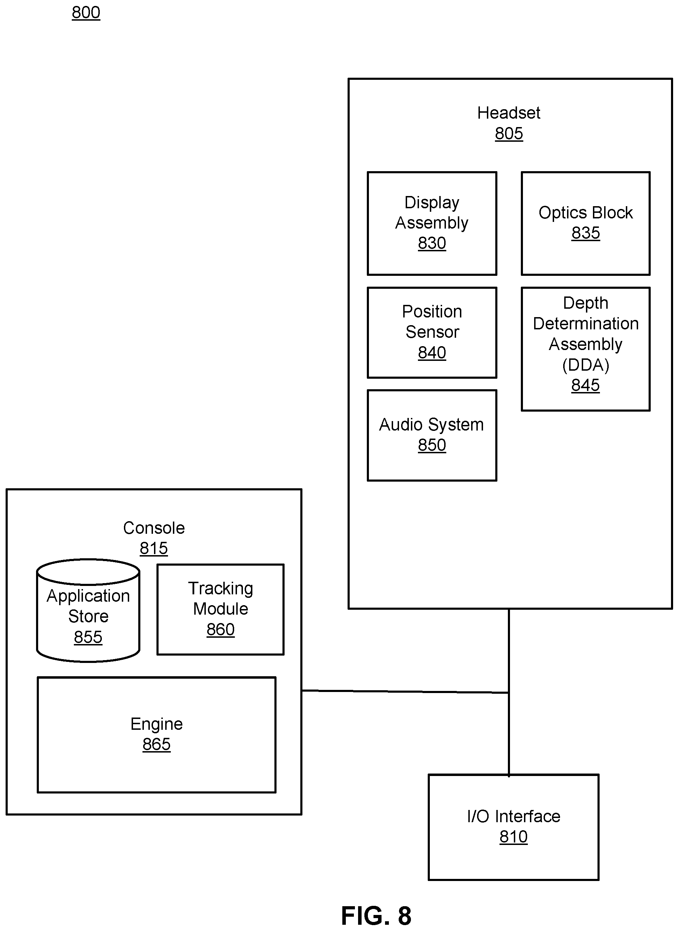

The headset 100 may provide for simultaneous localization and mapping (SLAM) for a position of the headset 100 and updating of a model of the local area. For example, the headset 100 may include a passive camera assembly (PCA) that generates color image data. The PCA may include one or more RGB cameras that capture images of some or all of the local area. Some or all of the imaging devices of the DDA 125 may also function as the PCA. The images captured by the PCA and the depth information determined by the DDA 125 may be used to determine parameters of the local area, generate a model of the local area, update a model of the local area, or some combination thereof. Furthermore, the position sensor 190 tracks the position (e.g., location and pose) of the headset 100 within the room. Additional details regarding the components of the headset 100 are discussed below in connection with FIG. 8.

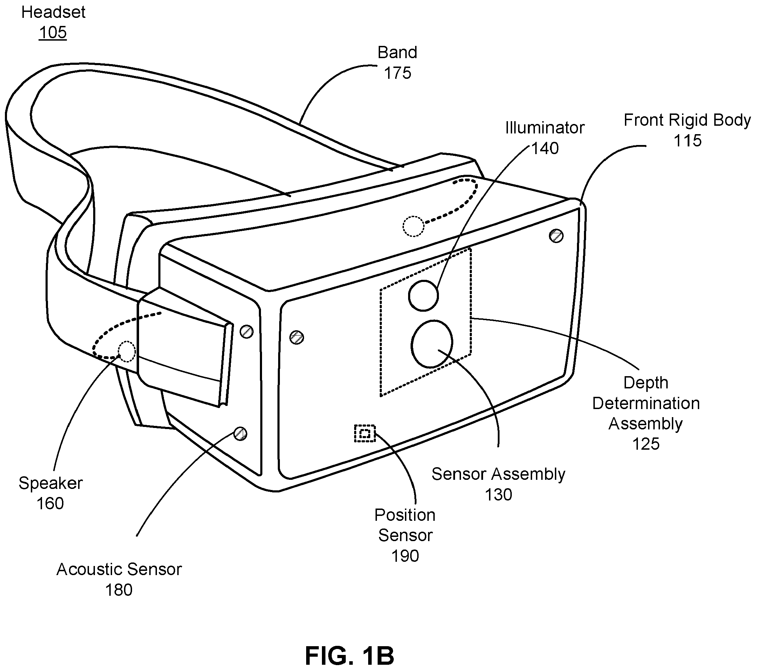

FIG. 1B is a perspective view of a headset 105 implemented as a HMD, in accordance with the present invention. In examples that describe an AR system and/or a MR system, portions of a front side of the HMD are at least partially transparent in the visible band (-380 nm to 850 nm), and portions of the HMD that are between the front side of the HMD and an eye of the user are at least partially transparent (e.g., a partially transparent electronic display). The HMD includes a front rigid body 115 and a band 185. The headset 105 includes many of the same components described above with reference to FIG. 1A, but modified to integrate with the HMD form factor. For example, the HMD includes a display assembly, the DDA 125, the audio system, and the position sensor 190. FIG. 1B shows the illuminator 140, the DDA 125, a plurality of the speakers 160, a plurality of acoustic sensors 180, and the position sensor 190.

FIG. 2 is a block diagram of a DDA 200, in accordance with the present invention. The DDA 125 of FIG. 1A and FIG. 1B may be an embodiment of the DDA 200. The DDA 200 is configured to obtain depth information of a local area surrounding the DDA 200. For example, the DDA 200 may be configured to detect the location of objects in a room. The DDA 200 comprises an illuminator 210, and a sensor assembly 220. Some examples of the DDA 200 have different components than those described here. Similarly, in some cases, functions can be distributed among the components in a different manner than is described here.

The illuminator 210 is configured to project light into the local area. The illuminator 140 of FIG. 1A and FIG. 1B may be an embodiment of the illuminator 210. The projected light may be in the IR. The illuminator 140 comprises a light source array 230 and an optical assembly 240.

The light source array 230 generates light. The light source array 230 includes a plurality of coherent light sources that emit light in the infrared (e.g., 950 nm, 1550 nm, etc.). The plurality of coherent light sources may have the same wavelength; or alternatively, one or more of the plurality of coherent light sources have different wavelengths. The plurality of coherent light sources may be subdivided into a plurality of coherent light source arrays. Each of the plurality of coherent light source arrays are configured to respectively emit light that is modulated at a specific frequency. For example, a first coherent light source array may be configured to emit light at a first frequency, a second coherent light source array may be configured to emit light that is modulated a second frequency (e.g., that is different than the first frequency), etc. The light source array 230 may use pulsed modulation. Alternatively, the light source array 230 may use continuous wave modulation. The plurality of coherent light sources may include, e.g., vertical cavity surface emitting laser (VCSELs), RC-LEDs, PIC based scanning projectors,, some other coherent source(s), or some combination thereof. In some examples of the invention, the plurality of coherent light source arrays are on a same chip.

The optical assembly 240 is configured to condition light from the light source array 230 and project the conditioned light into a local area of the DCA 200. The optical assembly 200 includes one or more lenses and/or one or more diffractive optical elements (DOEs). The one or more lenses and/or one or more DOEs may be used to, e.g., generate flood illumination, a spatial pattern, etc. The optical assembly 240 may tile the light emitted by the light source array (e.g., one or more of the plurality of coherent light source arrays), such that light emitted by the light source array 200 is tiled across the local area. For example, the optical assembly 240 may include one or more DOEs that tile the light emitted from the light source array 230. The optical assembly may include a steerable mirror or some other optical element to dynamically directionalize light, thereby providing additional selectivity of where the light is projected in the local area. In this manner light modulated at one frequency may be projected into a specific portion of the local area, and light modulated at a different frequency may be projected (concurrently or subsequently) into the specific portion and/or some other potion of the local area.

The sensor assembly 220 detects the light reflected/scattered from objects in the local area that were illuminated with light from the light source array. The sensor assembly 130 of FIG. 1A and FIG. 1B may be an embodiment of the sensor assembly 220. The sensor assembly 220 includes one or more indirect ToF sensors with parallel pixel architecture. Each indirect ToF sensor includes a plurality of pixels having parallel pixel architecture. Each of the pixels may be back side illuminated (BIS) complementary metal oxide semiconductors (CMOS). In some examples, the plurality of pixels are broadband pixels. Alternatively, the plurality of pixels may be narrowband (i.e., configured to detect light in the band emitted by the illuminator 210). For example, some or all of the plurality of pixels may include narrowband filters configured to transmit light emitted by the light source array 230. The parallel pixel architecture describes how each pixel includes and/or is coupled to dedicated respective compute circuitry (in a compute layer) for determining depth information for that pixel. The compute layer is configured to determine depth information for the local area using an indirect time-of-flight technique and one or more of the detected light that have different respective modulation frequencies.

The plurality of pixels is configured to detect light modulated at different frequencies. The plurality of pixels include different groups of pixels that are configured to detect light modulated at different frequencies. In some examples the different groups may each be associated with a specific frequency. For example, one group could be configured to detect light modulated at a first frequency (e.g., 30 MHz) and a second group could be configured to detect light modulated at a second frequency (e.g., 100 MHz). In other examples, one or more groups of pixels maybe dynamically configured to detect light over different ranges of frequencies in accordance with instructions from the compute circuitry. For example, one group could be configured to detect light modulated over a first range of frequency (e.g., 10-50 MHz) and a second group could be configured to detect light modulated at a second frequency (e.g., 80-150 MHz).

The different groups of pixels may have pixels with different detection areas. A detection area is the portion of the pixel that detects light (i.e., is photosensitive). For example, detection areas for pixels in a group may be the same, and detection areas of pixels in one group may be different from detection areas of pixels in other groups. Detection areas for pixels configured to detect higher frequencies may be smaller than detection areas for pixels configured to lower frequencies. For example, one group includes pixels configured to detect light modulated at a first frequency (and/or range of frequencies), and another group includes pixels configured to detect light modulated at a second frequency (and/or range of frequencies) that is higher than the first frequency. Each pixel of the first group of pixels may have a first detection area and each pixel of the second group of pixels may gave a second detection area, and the second detection area is smaller than the first detection area. In some embodiments, the detection areas of the pixels may be covered by, e.g., a microlens, a filter array (e.g., bandpass filter for light in the band emitted by the illuminator 210), a polarizer, or some combination thereof.

The compute layer may be configured to control elements of the DDA 200. The compute layer may be configured to provide instructions to the various components of the DDA 200 and calculate depth information for the local area. Some embodiments of the compute layer have different components than those described here. Similarly, in some cases, functions can be distributed among the components in a different manner than is described here.

The compute layer is configured to generate instructions for the illuminator 210 to emit light into the local area. The compute layer may select different frequencies for the different groups of pixels, and configure the groups of pixels to detect light modulated at their respective selected frequency. The compute layer may, e.g., determine range ambiguity locally in a region of interest using light modulated in different frequencies. The compute layer may run a small pre-exposure window with single and/or multiple frequencies of 5-10% of the pixels. The compute layer may extract depth information from the images to determine if the frequencies in an unambiguated range provide unique distance measurement. The compute layer may use magnitude and/or return signal from the plurality of pixels as confidence metric to measure range. Gradient based methods may be used (e.g., via the compute layer) where the native image is scaled down to a smaller pyramid and compared with a gray scale and/or color image (e.g., from a secondary camera that is part of the headset) that is operating in synchronization with the DDA 200. Motion compensation from the secondary camera (e.g., gray scale) may guide the DDA 200 to optimize the modulation frequency of the plurality of pixels. The compute layer instructs the illuminator 210 to illuminate a portion of the local area with light modulated with at least one of the selected frequencies. The compute layer may instruct the illuminator 210 to emit light modulated at one frequency and light modulated at another frequency concurrently. Alternatively, the compute layer may instruct the illuminator 210 to emit light in a time multiplexed manner (e.g., emit light modulated at one frequency and then emit light modulated at another frequency).

The compute layer may instruct the illuminator 210 to illuminate some or all of the local area with light modulated at different frequencies. The compute layer may instruct the illuminator 210 to emit light modulated at one frequency and emit (concurrently or time multiplexed) light modulated at another frequency over a same portion of the local area. The compute layer may instruct the illuminator 210 to emit light modulated at one frequency and light modulated at another frequency (concurrently or time multiplexed) over different respective portions of the local area. For example, the compute layer may identify particular portions of the local area to track and instruct the illuminator 210 to selectively illuminate the identified portions with light modulated at a first frequency, and in some examples light modulated with a second frequency, light modulated with a third frequency, etc. In some examples, the compute layer may determine a first portion of the local area to illuminate with light having a first modulation frequency based in part on a first set of signal to noise ratios (SNRs) detected by a first subset of the plurality of pixels that detect light from a first portion of the local area. The compute layer may also determine a second portion of the local area to illuminate with light having a second modulation frequency based in part on a second set of SNRs detected by a second subset of the plurality of pixels that detect light from the second portion of the local area. The different SNRs may be based on, e.g., the first portion of the local area being much closer to the DDA 200 than objects in the second portion of the local area. For example, light modulated with a low frequency may be used for objects (e.g., walls of room) that are relatively far away from the DDA, and light modulated with a high frequency may be used for objects that are closers to the DDA (e.g., user's hands).

The compute layer may determine the first portion of the local area to illuminate with the light having the first modulation frequency based in part on the first portion of the local area being at a first distance that is greater than a threshold distance from the sensor assembly 220. And the compute layer may determine the second portion of the local area to illuminate with the light having the second modulation frequency based in part on the second portion of the local area being at a second distance that is less than the threshold distance from the sensor assembly 220. And the compute layer may (as needed, periodically, etc.) illuminate the first portion of the local area with the second modulation frequency and, likewise illuminate the second portion of the local area with the first modulation frequency to ensure the calculated depth information is correct.

The compute layer is configured to determine depth information for the local area using an indirect time-of-flight technique and one or more of the detected light that have different respective modulation frequencies. The compute layer includes the respective compute circuitry for each of the plurality of pixels. Compute circuitry for a pixel may include, e.g., one or more analog to digital converters (ADCs) and a cross correlation circuit. The ADCs may be configured to output a digital signal corresponding to light detected at a particular modulation frequency. The cross-correlation circuit may be configured to determine an estimated depth based on the first digital signal and a second digital signal output from an adjacent pixel configured to detect light having a different modulation frequency. For example, the cross correlation circuit may use quadrature sampling to identify potential depths, and disambiguate the potential depths using the second digital signal to determine the depth information. The compute layer may store the depth information in a model of the local area. The model describing size and shapes of objects and the positions of those objects in the local area.

Note that any given pixel of the indirect ToF sensor is able to use information from one or more adjacent pixels that are configured to detect modulated light at a different frequency than the given pixel to disambiguate depth information for the given pixel. And as the indirect ToF sensor can concurrently detect light modulated at different frequencies, pixels of the indirect ToF sensor are able to determine associated depth information faster than conventional indirect ToF systems, thereby, mitigating changes of motion blur relative a conventional indirect ToF system.

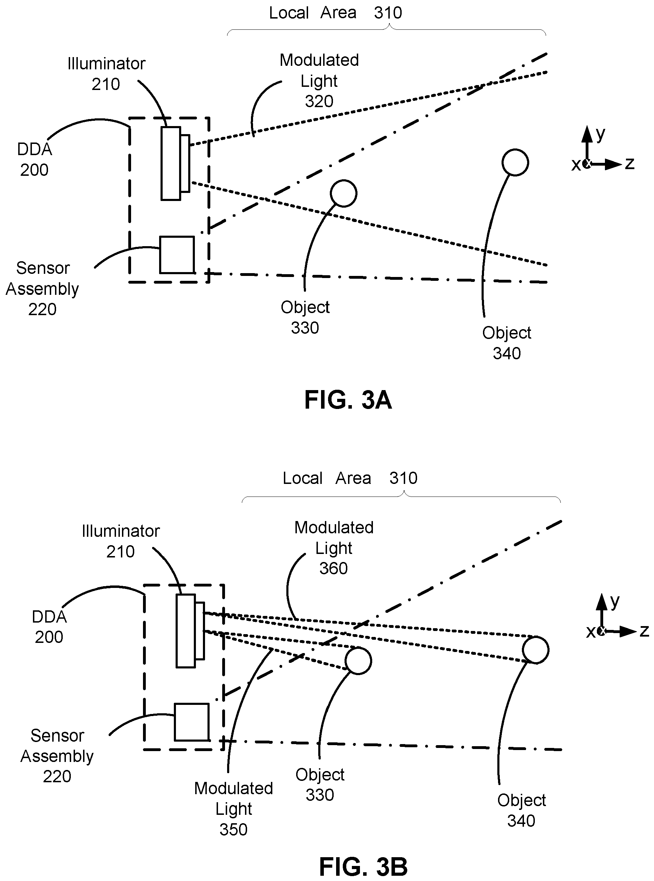

FIG. 3A is a schematic diagram of the DDA 200 flood illuminating a local area 310 with light modulated at different frequencies. As illustrated the illuminator 210 is illuminating the local area 310 with modulated light 320. The modulated light 320 includes light modulated at a first frequency (e.g., 100 MHz) and light modulated at a second frequency (e.g., 30 MHz) that is lower than the first frequency. The modulated light 320 may also include light modulated at a third frequency, fourth frequency, etc. The modulated light 320 reflects off object 330 and off object 340 that are in the local area 310.

The sensor assembly 220 detects the reflected and/or scattered light from the object 330 and the object 340. As described above, the sensor assembly 220 includes one or more indirect ToF sensors that includes a plurality of pixels. A first group of the plurality of pixels is configured to detect light modulated at the first frequency, and a second group of the plurality of pixels is configured to detect light modulated at the second frequency. And in embodiments where the light emitted from the illuminator 210 that includes light modulated at other frequencies the plurality of pixels would also include groups of pixels configured to detect light modulated at those frequencies. The compute circuitry for each pixel determines, at the pixel, depth information for that pixel using ToF depth determination techniques. In some examples amplitude modulation (AM) homodyne phase-shift is used in demodulation. In other examples, AM heterodyne ZF-phase may be used for demodulation. In some examples, a cross-correlation circuit in the compute circuitry may use quadrature sampling to identify potential depths for a given pixel, and disambiguate the potential depths using a second digital signal from an adjacent pixel (configured to detect light modulated at a different frequency) to determine the depth information. The compute layer may store the depth information in a model of the local area.

Note that in this example, the pixel configured to detect light modulated at one frequency (e.g., the first) may be determining depth information at the same time as another adjacent pixel that is configured to detect light at different frequency (e.g., the second). And that information from a given pixel can be used to disambiguate depth information as needed for the adjacent pixel. Accordingly, the depth information for adjacent pixels of different frequencies may be determined in parallel.

As illustrated in FIG. 3A, concurrent flood illumination of the local area 310 with light modulated at different frequencies is used to determine depth information. In some embodiments, instead of flood illumination, the compute layer may instruct the illuminator 210 to selectively illuminate one or more portions of the local area.

FIG. 3B is a schematic diagram of the DDA of FIG. 3A selectively illuminating objects in the local area with light, in accordance with one or more embodiments. The compute layer may instruct the illuminator 210 to illuminate the object 330 with modulated light 350, and illuminate the object 340 with modulated light 360. In some examples, the modulated light 350 and the modulated light 360 includes both the light modulated at the first frequency and the light modulated at the second frequency. However, in some examples (e.g., once a depth of an object is known within the local area) it may not be necessary to use multiple frequencies to disambiguate (at least for every depth frame). For example, the object 330 (e.g., hands of a user) may be closer to the DDA 200 than the object 340 (e.g., wall). Once the depth information is determined for the object 330, the compute layer may instruct the illuminator 210 to illuminate the object 330 with light modulated at the first frequency and illuminate the object 340 with light modulated at the second frequency, and determine depth information for the objects 330, 340 using the single frequency of modulated light. The compute layer may periodically (e.g., every 5 frames), as needed (e.g., fast and/or large change in relative position between object and DDA 200), etc., instruct the illuminator to concurrently illuminate an object with light modulated at the first frequency and light modulated at the second frequency.

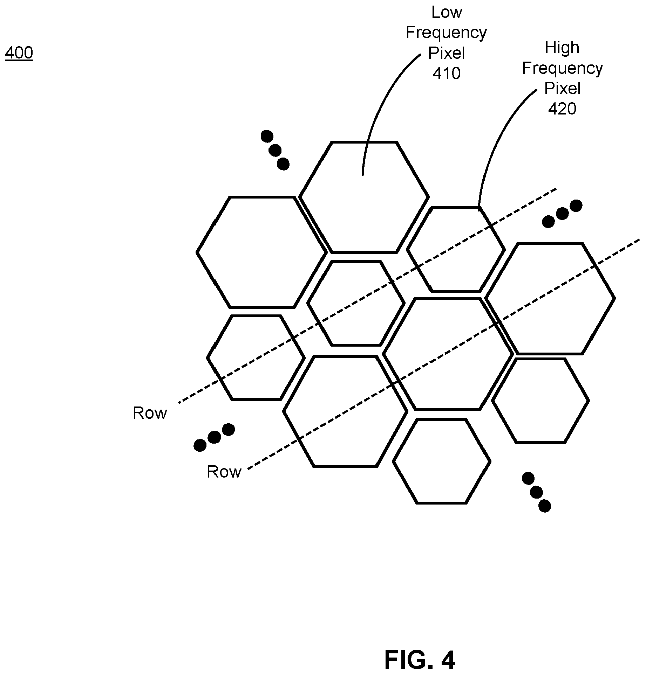

FIG. 4 is an example top down view 400 of a portion of an indirect ToF sensor with parallel pixel architecture. The indirect ToF sensor includes a plurality of groups of pixels that have different detection areas. In the illustrated example, the indirect ToF sensor includes two groups of pixels, a low frequency group and a high frequency group. The low frequency group includes pixels configured to detect light modulated at a first frequency (e.g., low frequency pixel 410), and the high frequency group includes pixels configured to detect light modulated at a second frequency (e.g., high frequency pixel 420) that is higher than the first frequency. For example, the first frequency may be 10 MHz, and the second frequency 100 MHz. As shown, low frequency pixels have a larger detection area (photosensitive portion of a pixel) than high frequency detection pixels.

Note the difference in size in the detection areas may facilitate increased signal-to-noise ratio (SNR) for some use cases. For example, depth resolution is generally more important for objects that are closer to the DDA. As such, light modulated for high frequencies may be used primarily for objects that are close to the DDA, and light modulated for lower frequencies may be used primarily for objects that are far away from the DDA. As such, the larger detection area for the low frequency pixels helps improve SNR relative to embodiments where the detection areas have a same size regardless of the modulation frequency of the light they are configured to detect.

As illustrated, the detection areas of the pixels are hexagonal shaped. However, in other examples, the detection areas may have other shapes (e.g., rectangular, octagonal, etc.). In some examples, pixels configured to detect light from a local area that has a first modulation frequency are arranged in a series of rows. And interleaved between those rows are rows of pixels that are configured to detect light from the local area that has a different modulation frequency. For example, in FIG. 4, the high frequency pixels are arranged in rows that are interleaved between rows of low frequency pixels. As shown each row of high frequency pixels is bordered by two rows of low frequency pixels, and each row of low frequency pixels is bordered by two rows of high frequency pixels. In other embodiments, there may be a plurality of rows of high frequency pixels that are directly between adjacent rows of low frequency pixels and/or a plurality of rows of low frequency pixels that are directly between adjacent rows of high frequency pixels.

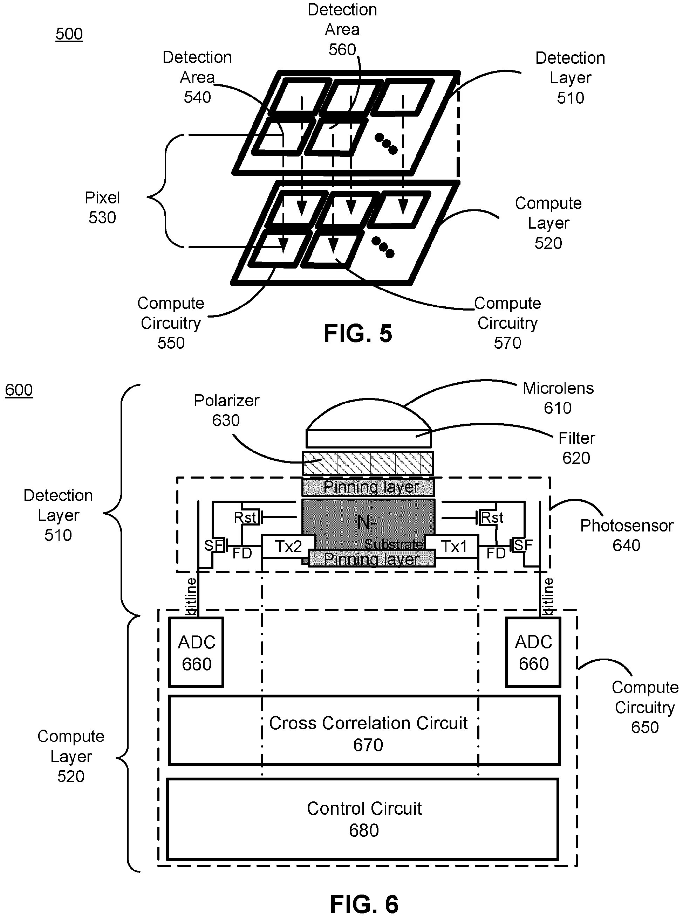

FIG. 5 is an abstract view 500 of a portion of an indirect ToF sensor with parallel pixel architecture. The indirect ToF sensor includes a plurality of pixels that are presented in an exploded view showing a detection layer 510 and a compute layer 520.

The detection layer 510 detects light from a local area that is modulated at different frequencies. The detection layer 510 includes the respective detection areas of each of the pixels, and may include additional components (e.g., polarizer, filter array (e.g., color filter array), microlens. etc.). Note that as shown the detection areas of the different pixels have a same area. In other examples, the detection areas associated with pixels configured to detect light modulated at different frequencies may differ (e.g., as in FIG. 4).

The compute layer 520 is configured to determine depth information for a local area using an indirect time-of-flight technique and signals corresponding to light detected at one or more of the pixels. The compute layer 520 is positioned below the detection layer. The compute layer 520 includes the compute circuitry for each of the plurality of pixels. Note that in some examples of the present invention, some or all of the plurality of pixels may have their own clock. Some or all of the pixels may operate in an asynchronous manner, and each pixel may determine depth information corresponding to light it detects via its corresponding detection area. For example, a pixel 530 includes a detection area 540 and compute circuitry 550. The detection area 540 is configured to detect light modulated at a first frequency and generate a corresponding first digital signal that is used by the compute circuity to determine depth information. In some examples, the compute circuitry 550 determines an estimated depth based on the first digital signal and a second digital signal output from an adjacent pixel configured to detect light having a different modulation frequency. For example, the adjacent pixel may be configured to detect light modulated at a differ modulation frequency than the pixel 530. The adjacent pixel may include a detection area 560 and compute circuitry 580 that generates depth estimate (e.g., second digital signal). In order to disambiguate the estimated depth information, the pixel 530 may use the generated depth estimate from the adjacent pixel (e.g., from the compute circuitry 580).

FIG. 6 is a block diagram of a structure of a pixel 600 within the indirect ToF sensor of FIG. 5. The pixel may be an embodiment of the pixel described above with respect to, e.g., FIGs 1-5. Some embodiments of the pixel 600 have different components than those described here. Similarly, in some cases, functions can be distributed among the components in a different manner than is described here. For example, ADCs may be part of the detection layer 510 instead of the compute layer 520.

The detection layer 510 detects light from a local area that is modulated at different frequencies. In the illustrated example, the detection layer 510 includes a microlens 610, a filter 620, a polarizer 630, and a photosensor 640. The microlens 610 gathers light from the local area and focuses it toward a detection area of the photosensor 640. The filter 620 filters the light from the microlens 610. For example, the filter 620 may be used to filter out light that is outside of the band emitted by an illuminator of the DDA 200. The polarizer 630 polarizes the filtered light, and the polarized light is incident on the photosensor 640. As illustrated, the microlens 610, the filter 620, and the polarizer 630 are in optical series with a detection area of the photosensor 640.

The compute layer 520 is configured to determine depth information. The compute layer 520 includes compute circuitry 650 for the pixel 600. The compute circuitry 650 includes one or more ADCs, a cross correlation circuit 670, and a control circuit 680. As shown there are two ADCs 650, but there may be one ADC, or more than two ADCs. The one or more ADCs are configured to configured to output one or more digital signals based on light detected by the photosensor 640 that correspond to detected light that has at a particular modulation frequency.

The cross correlation circuit 670 is configured to determine an estimated depth based on the one or more digital signals output from the ADCs 660, or the one or more digital signals output from the ADCs 660 and an adjacent pixel configured to detect light having a different modulation frequency. The cross correlation circuit 670 demodulates the signal via correlation with a clock that was used to modulate the illuminator (e.g., the illuminator 210) that generated the light. Phase and magnitude may be extracted for a plurality of different samples (e.g., four different phases). The cross-correlation circuit 670 may use quadrature sampling to determined depth information. The cross-correlation circuit 670 may use quadrature sampling to estimate potential depths, and disambiguate the potential depths using a second digital signal from an adjacent pixel (configured to detect light modulated at a different frequency) to determine the depth information. The cross-correlation circuit 670 may store the depth information in a model of the local area.

The control circuit 680 may control the illuminator 680. The control circuit may, e.g., determine that the received signal is saturating the photosensor 640 and instruct the illuminator to reduce the intensity of the emitted signal corresponding to the pixel 600.

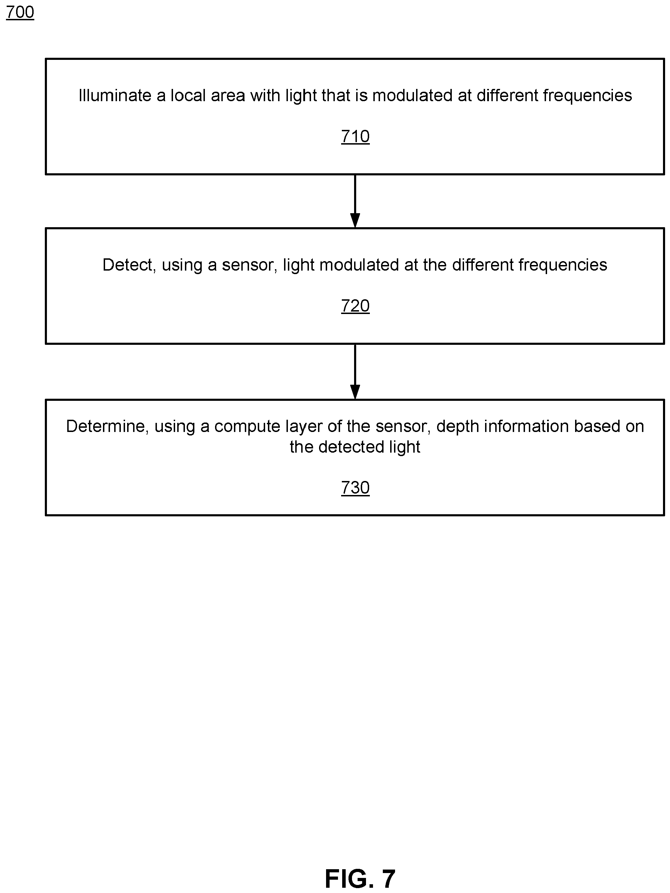

FIG. 7 is a flowchart illustrating a process 700 for determining depth information using a DDA. The process shown in FIG. 7 may be performed by components of a DDA (e.g., DDA 200 of FIG. 2). Other entities may perform some or all of the steps in FIG. 7 in other examples. Examples of the invention may include different and/or additional steps or perform the steps in different orders.

The DDA selects 710 illuminates a local area with light that is modulated at different frequencies. The DDA may illuminate the local area using an illuminator that includes a plurality of coherent light source arrays. For example, the DDA may instruct a first coherent light source array to emit light that is modulated at a first frequency, and instruct a second coherent light source array to emit light that is modulated at a second frequency that is different than the first frequency.

The DDA detects 720 light modulated at the different frequencies. The DDA detects the light using a sensor that includes a plurality of pixels having parallel architecture. The sensor may, e.g., detect at least one of light modulated at a first frequency or light modulated at a second frequency.

The DDA 730 determines, using a compute layer of the sensor, depth information based on the detected light. The sensor includes a plurality of pixels, and each pixel has dedicated compute circuitry. The plurality of pixels include a plurality of groups of pixels, and each group of pixels is each configured to detect light that is modulated a specific frequency (or ranges of frequencies) that differs from other groups of pixels. The compute layer uses information from the pixels and an indirect ToF technique to determine depth information. This occurs on a per pixel basis as described above with regard to, e.g., FIG. 6.

FIG. 8 is a system 800 that includes a headset 805, in accordance with the present invention. In some examples, the headset 805 may be the headset 100 of FIG. 1A or the headset 105 of FIG. 1B. The system 800 may operate in an artificial reality environment (e.g., a virtual reality environment, an augmented reality environment, a mixed reality environment, or some combination thereof). The system 800 shown by FIG. 8 includes the headset 805 and an input/output (I/O) interface 810 that is coupled to a console 815. While FIG. 8 shows an example system 800 including one headset 805 and one I/O interface 810, in other examples any number of these components may be included in the system 800. For example, there may be multiple headsets each having an associated I/O interface 810, with each headset and I/O interface 810 communicating with the console 815. In alternative configurations, different and/or additional components may be included in the system 800. Additionally, functionality described in conjunction with one or more of the components shown in FIG. 8 may be distributed among the components in a different manner than described in conjunction with FIG. 8. For example, some or all of the functionality of the console 815 may be provided by the headset 805.

The headset 805 includes the display assembly 830, an optics block 835, one or more position sensors 840, and the DDA 845. Some embodiments of headset 805 have different components than those described in conjunction with FIG. 8. Additionally, the functionality provided by various components described in conjunction with FIG. 8 may be differently distributed among the components of the headset 805 or be captured in separate assemblies remote from the headset 805.

The display assembly 830 displays content to the user in accordance with data received from the console 815. The display assembly 830 displays the content using one or more display elements (e.g., the display elements 120). A display element may be, e.g., an electronic display. The display assembly 830 may comprise a single display element or multiple display elements (e.g., a display for each eye of a user). Examples of an electronic display include: a liquid crystal display (LCD), an organic light emitting diode (OLED) display, an active-matrix organic light-emitting diode display (AMOLED), a waveguide display, some other display, or some combination thereof. The display element 120 may also include some or all of the functionality of the optics block 835.

The optics block 835 may magnify image light received from the electronic display, corrects optical errors associated with the image light, and presents the corrected image light to one or both eyeboxes of the headset 805. The optics block 835 may include one or more optical elements. Example optical elements included in the optics block 835 include: an aperture, a Fresnel lens, a convex lens, a concave lens, a filter, a reflecting surface, or any other suitable optical element that affects image light. Moreover, the optics block 835 may include combinations of different optical elements. One or more of the optical elements in the optics block 835 may have one or more coatings, such as partially reflective or anti-reflective coatings.

Magnification and focusing of the image light by the optics block 835 allows the electronic display to be physically smaller, weigh less, and consume less power than larger displays. Additionally, magnification may increase the field of view of the content presented by the electronic display. For example, the field of view of the displayed content is such that the displayed content is presented using almost all (e.g., approximately 110 degrees diagonal), and in some cases, all of the user's field of view. Additionally, in some examples, the amount of magnification may be adjusted by adding or removing optical elements.

The optics block 835 may be designed to correct one or more types of optical error. Examples of optical error include barrel or pincushion distortion, longitudinal chromatic aberrations, or transverse chromatic aberrations. Other types of optical errors may further include spherical aberrations, chromatic aberrations, or errors due to the lens field curvature, astigmatisms, or any other type of optical error. Content provided to the electronic display for display may be pre-distorted, and the optics block 835 corrects the distortion when it receives image light from the electronic display generated based on the content.

The position sensor 840 is an electronic device that generates data indicating a position of the headset 805. The position sensor 840 generates one or more measurement signals in response to motion of the headset 805. The position sensor 190 is an embodiment of the position sensor 840. Examples of a position sensor 840 include: one or more IMUs, one or more accelerometers, one or more gyroscopes, one or more magnetometers, another suitable type of sensor that detects motion, or some combination thereof. The position sensor 840 may include multiple accelerometers to measure translational motion (forward/back, up/down, left/right) and multiple gyroscopes to measure rotational motion (e.g., pitch, yaw, roll). In some embodiments, an IMU rapidly samples the measurement signals and calculates the estimated position of the headset 805 from the sampled data. For example, the IMU integrates the measurement signals received from the accelerometers over time to estimate a velocity vector and integrates the velocity vector over time to determine an estimated position of a reference point on the headset 805. The reference point is a point that may be used to describe the position of the headset 805. While the reference point may generally be defined as a point in space, however, in practice the reference point is defined as a point within the headset 805.

The DDA 845 generates depth information for a portion of the local area. The DDA 845 may be an embodiment of the DDA 200 of FIG. 2. Operation and structure of the DDA 845 is described with regard to FIGs. 2-7.

The audio system 850 provides audio content to a user of the headset 805. The audio system 850 may comprise one or acoustic sensors, one or more transducers, and an audio controller. The audio system 850 may provide spatialized audio content to the user. In some embodiments, the audio system may request acoustic parameters from a mapping server. The acoustic parameters describe one or more acoustic properties (e.g., room impulse response, a reverberation time, a reverberation level, etc.) of the local area. The audio system 850 may provide information describing at least a portion of the local area from e.g., the DDA 845 and/or location information for the headset 805 from the position sensor 840. The audio system 850 may generate one or more sound filters using one or more of the acoustic parameters and use the sound filters to provide audio content to the user.

The I/O interface 810 is a device that allows a user to send action requests and receive responses from the console 815. An action request is a request to perform a particular action. For example, an action request may be an instruction to start or end capture of image or video data, or an instruction to perform a particular action within an application. The I/O interface 810 may include one or more input devices. Example input devices include: a keyboard, a mouse, a game controller, or any other suitable device for receiving action requests and communicating the action requests to the console 815. An action request received by the I/O interface 810 is communicated to the console 815, which performs an action corresponding to the action request. In some embodiments, the I/O interface 810 includes an IMU that captures calibration data indicating an estimated position of the I/O interface 810 relative to an initial position of the I/O interface 810. In some embodiments, the I/O interface 810 may provide haptic feedback to the user in accordance with instructions received from the console 815. For example, haptic feedback is provided when an action request is received, or the console 815 communicates instructions to the I/O interface 810 causing the I/O interface 810 to generate haptic feedback when the console 815 performs an action.

The console 815 provides content to the headset 805 for processing in accordance with information received from one or more of: the DDA 845, the headset 805, and the I/O interface 810. In the example shown in FIG. 8, the console 815 includes an application store 855, a tracking module 860, and an engine 865. Some embodiments of the console 815 have different modules or components than those described in conjunction with FIG. 8. Similarly, the functions further described below may be distributed among components of the console 815 in a different manner than described in conjunction with FIG. 8. In some examples, the functionality discussed herein with respect to the console 815 may be implemented in the headset 805, or a remote system.

The application store 855 stores one or more applications for execution by the console 815. An application is a group of instructions, that when executed by a processor, generates content for presentation to the user. Content generated by an application may be in response to inputs received from the user via movement of the headset 805 or the I/O interface 810. Examples of applications include: gaming applications, conferencing applications, video playback applications, or other suitable applications.

The tracking module 860 tracks movements of the headset 805 or of the I/O interface 810 using information from the DDA 845, the one or more position sensors 840, or some combination thereof. For example, the tracking module 860 determines a position of a reference point of the headset 805 in a mapping of a local area based on information from the headset 805. The tracking module 860 may also determine positions of an object or virtual object. Additionally, in some examples, the tracking module 860 may use portions of data indicating a position of the headset 805 from the position sensor 840 as well as representations of the local area from the DDA 845 to predict a future location of the headset 805. The tracking module 860 provides the estimated or predicted future position of the headset 805 or the I/O interface 810 to the engine 865.

The engine 865 executes applications and receives position information, acceleration information, velocity information, predicted future positions, or some combination thereof, of the headset 805 from the tracking module 860. Based on the received information, the engine 865 determines content to provide to the headset 805 for presentation to the user. For example, if the received information indicates that the user has looked to the left, the engine 865 generates content for the headset 805 that mirrors the user's movement in a virtual local area or in a local area augmenting the local area with additional content. Additionally, the engine 865 performs an action within an application executing on the console 815 in response to an action request received from the I/O interface 810 and provides feedback to the user that the action was performed. The provided feedback may be visual or audible feedback via the headset 805 or haptic feedback via the I/O interface 810.

A network couples the headset 805 and/or the console 815 to external systems. The network may include any combination of local area and/or wide area networks using both wireless and/or wired communication systems. For example, the network may include the Internet, as well as mobile telephone networks. In one example, the network uses standard communications technologies and/or protocols. Hence, the network may include links using technologies such as Ethernet, 802.11, worldwide interoperability for microwave access (WiMAX), 2G/3G/4G mobile communications protocols, digital subscriber line (DSL), asynchronous transfer mode (ATM), InfiniBand, PCI Express Advanced Switching, etc. Similarly, the networking protocols used on the network can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network can be represented using technologies and/or formats including image data in binary form (e.g. Portable Network Graphics (PNG)), hypertext markup language (HTML), extensible markup language (XML), etc. In addition, all or some of links can be encrypted using conventional encryption technologies such as secure sockets layer (SSL), transport layer security (TLS), virtual private networks (VPNs), Internet Protocol security (IPsec), etc.

One or more components of system 800 may contain a privacy module that stores one or more privacy settings for user data elements. The user data elements describe the user or the headset 805. For example, the user data elements may describe a physical characteristic of the user, an action performed by the user, a location of the user of the headset 805, a location of the headset 805, an H RTF for the user, etc. Privacy settings (or "access settings") for a user data element may be stored in any suitable manner, such as, for example, in association with the user data element, in an index on an authorization server, in another suitable manner, or any suitable combination thereof.

A privacy setting for a user data element specifies how the user data element (or particular information associated with the user data element) can be accessed, stored, or otherwise used (e.g., viewed, shared, modified, copied, executed, surfaced, or identified). The privacy settings for a user data element may specify a "blocked list" of entities that may not access certain information associated with the user data element. The privacy settings associated with the user data element may specify any suitable granularity of permitted access or denial of access. For example, some entities may have permission to see that a specific user data element exists, some entities may have permission to view the content of the specific user data element, and some entities may have permission to modify the specific user data element. The privacy settings may allow the user to allow other entities to access or store user data elements for a finite period of time.

The privacy settings may allow a user to specify one or more geographic locations from which user data elements can be accessed. Access or denial of access to the user data elements may depend on the geographic location of an entity who is attempting to access the user data elements. For example, the user may allow access to a user data element and specify that the user data element is accessible to an entity only while the user is in a particular location. If the user leaves the particular location, the user data element may no longer be accessible to the entity. As another example, the user may specify that a user data element is accessible only to entities within a threshold distance from the user, such as another user of a headset within the same local area as the user. If the user subsequently changes location, the entity with access to the user data element may lose access, while a new group of entities may gain access as they come within the threshold distance of the user.

The system 800 may include one or more authorization/privacy servers for enforcing privacy settings. A request from an entity for a particular user data element may identify the entity associated with the request and the user data element may be sent only to the entity if the authorization server determines that the entity is authorized to access the user data element based on the privacy settings associated with the user data element. If the requesting entity is not authorized to access the user data element, the authorization server may prevent the requested user data element from being retrieved or may prevent the requested user data element from being sent to the entity. Although this disclosure describes enforcing privacy settings in a particular manner, this disclosure contemplates enforcing privacy settings in any suitable manner.

### Additional Configuration Information

The foregoing description of examples of the present invention has been presented for illustration; it is not intended to be exhaustive or to limit the patent rights to the precise forms disclosed. Persons skilled in the relevant art can appreciate that many modifications and variations are possible considering the above disclosure.

Some portions of this description describe aspects of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A sensor comprising:
a plurality of pixels, wherein each pixel comprises dedicated compute circuitry, the plurality of pixels including:
a first group of pixels configured to detect light from a local area that has a first modulation frequency,
a second group of pixels configured to detect light from the local area that has a second modulation frequency; and
a compute layer that includes the compute circuitry for each of the plurality of pixels, the compute layer configured to determine depth information for the local area using an indirect time-of-flight technique and one or both of the detected light that has the first modulation frequency and the detected light that has the second modulation frequency.

2. The sensor of claim 1, wherein:
the first frequency is lower than the second frequency, and each pixel of the first group of pixels has a first detection area, and each pixel of the second group of pixels has a second detection area that is smaller than the first detection area;
wherein the first group of pixels is arranged in a series of rows with rows of the second group of pixels interleaved therebetween.

3. The sensor of claim 1, wherein each of the plurality of pixels has its own clock, and the depth information is computed asynchronously for the plurality of pixels.

4. The sensor of claim 1, wherein the compute circuitry for each of the plurality of pixels includes:
an analog to digital converter configured to output a first digital signal corresponding to light detected having a particular modulation frequency; and
a cross-correlation circuit configured to:
determine an estimated depth based on the first digital signal and a second digital signal output from an adjacent pixel configured to detect light having a different modulation frequency.

5. The sensor of claim 1, wherein the sensor is part of a depth determination assembly that includes an illuminator;
wherein the compute layer is configured to:
determine a first portion of the local area to illuminate with the light having the first modulation frequency; and
determine a second portion of the local area to illuminate with the light having the second modulation frequency, wherein the first portion of the local area is different than the second portion of the local area;
wherein the illuminator is configured to concurrently project light having the first modulation frequency to the first portion of the local area and light having the second modulation frequency to the second portion of the local area.

6. The sensor of claim 5, wherein the compute layer is further configured to:
determine the first portion of the local area to illuminate with the light having the first modulation frequency based in part on a first set of signal to noise ratios (SNRs) detected by a first subset of the plurality of pixels that detect light from the first portion of the local area, and
determine the second portion of the local area to illuminate with the light having the second modulation frequency based in part on a second set of SNRs detected by a second subset of the plurality of pixels that detect light from the second portion of the local area.

7. The sensor of claim 5, wherein the first portion of the local area is further from the user than the second portion of the local area, and compute layer is further configured to:
determine the first portion of the local area to illuminate with the light having the first modulation frequency based in part on the first portion of the local area being at a first distance that is greater than a threshold distance from the sensor, and
determine the second portion of the local area to illuminate with the light having the second modulation frequency based in part on the second portion of the local area being at a second distance that is less than the threshold distance from the sensor.

8. The sensor of claim 1, wherein each pixel includes a microlens, a filter, and a polarizer in optical series with a detection area of the pixel; and/or
wherein the sensor is integrated into a headset.

9. A depth determination assembly (DDA) comprising:
an illuminator comprising:
a first coherent light source array on a substrate, the first coherent light source array configured to emit light that is modulated at a first frequency;
a second coherent light source array on the substrate, the second coherent light source array configured to emit light that is modulated at a second frequency; and
an optical assembly configured to condition light from the first coherent light source array and light from the second coherent light source array and project the conditioned light into a local area of the DDA;
a sensor comprising:
a plurality of pixels, wherein each pixel comprises dedicated compute circuitry, the plurality of pixels including:
a first group of pixels configured to detect light from the local area that has the first modulation frequency,
a second group of pixels configured to detect light from the local area that has the second modulation frequency; and
a compute layer that includes the compute circuitry for each of the plurality of pixels, wherein the compute layer is configured to determine depth information for the local area using an indirect time-of-flight technique and one or both of the detected light that has the first modulation frequency and the detected light that has the second modulation frequency

10. The DDA of claim 9, wherein:
the first frequency is lower than the second frequency, and each pixel of the first group of pixels has a first detection area, and each pixel of the second group of pixels has a second detection area that is smaller than the first detection area;
wherein the first group of pixels is arranged in a series of rows with rows of the second group of pixels interleaved therebetween.

11. The DDA of claim 9, wherein each of the plurality of pixels has its own clock, and the depth information is computed asynchronously for the plurality of pixels.

12. The DDA of claim 9, wherein the compute circuitry for each of the plurality of pixels includes:
an analog to digital converter configured to output a first digital signal corresponding to light detected having at a particular modulation frequency; and
a cross-correlation circuit configured to:
determine an estimated depth based on the first digital signal and a second digital signal output from an adjacent pixel configured to detect light having a different modulation frequency.

13. The DDA of claim 9, wherein the compute layer is configured to:
determine a first portion of the local area to illuminate with the light having the first modulation frequency;
determine a second portion of the local area to illuminate with the light having the second modulation frequency, wherein the first portion of the local area is different than the second portion of the local area; and
the illuminator is configured to concurrently project light having the first modulation frequency to the first portion of the local area and light having the second modulation frequency to the second portion of the local area.

14. The DDA of claim 13, wherein the compute layer is further configured to:
determine the first portion of the local area to illuminate with the light having the first modulation frequency based in part on a first set of signal to noise ratios (SNRs) detected by a first subset of the plurality of pixels that detect light from the first portion of the local area, and
determine the second portion of the local area to illuminate with the light having the second modulation frequency based in part on a second set of SNRs detected by a second subset of the plurality of pixels that detect light from the second portion of the local area.

15. The DDA of claim 9, wherein each pixel includes a microlens, a filter, and a polarizer in optical series with a detection area of the pixel; and/or
wherein the DDA is integrated into a headset.

16. A non-transitory computer readable medium configured to store program code instructions, when executed by a processor of a depth determination assembly (DDA), cause the DDA to perform steps comprising:
detecting, using a sensor, at least one of light modulated at a first frequency or light modulated at a second frequency, wherein the light is received from a local area, the sensor comprising:
a plurality of pixels, and each pixel has dedicated compute circuitry, the plurality of pixels including:
a first group of pixels configured to detect light from the local area that has the first modulation frequency,
a second group of pixels configured to detect light from the local area that has the second modulation frequency;
determining, using a compute layer of the sensor, depth information for the local area using an indirect time-of-flight technique and one or both of the detected light that has the first modulation frequency and the detected light that has the second modulation frequency, wherein the compute layer includes the compute circuitry for each of the plurality of pixels.
